(19)

Europäisches Patentamt
European Patent Office
Office européen des brevets

(11) **EP 3 163 474 A1**

(12) **EUROPEAN PATENT APPLICATION**

(43) Date of publication:
 **03.05.2017 Bulletin 2017/18**

(51) Int Cl.:
 **G06F 17/30** *(2006.01)*

(21) Application number: **16169809.7**

(22) Date of filing: **16.05.2016**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**
 Designated Validation States:
 **MA MD**

(30) Priority: **28.09.2015 GB 201517067**

(71) Applicant: **FUJITSU LIMITED**
 **211-8588 Kanagawa (JP)**

(72) Inventor: **HU, Bo**
 **Winchester, SO23 7DT (GB)**

(74) Representative: **Wilding, Frances Ward**
 **Haseltine Lake LLP**
 **Lincoln House, 5th Floor**
 **300 High Holborn**
 **London WC1V 7JH (GB)**

(54) **A SIMILARITY MODULE, A LOCAL COMPUTER, A SERVER OF A DATA HOSTING SERVICE AND ASSOCIATED METHODS**

(57) A similarity module is arranged to identify whether a local data file is identical in whole or in part to any of a plurality of existing files stored by a data hosting service. The local file and the existing files are both hierarchically structured, preferably according to a graph-based hierarchical model, the similarity module comprising: one or more inputs for metadata and checksums from the local file and from the existing files; and a processor configured: to compare the local file metadata with the metadata of existing data files; to identify one or more candidate existing files for which the existing file metadata matches the local file metadata to a predetermined extent; to compare a local file checksum with a checksum of each of the one or more candidate existing files and if there is a matching candidate existing file for which the checksum matches the local file checksum, to identify the local file as a duplicate file of the matching candidate existing file; and if there is no matching candidate existing file for which the existing file checksum matches the local file checksum, to compare local segment checksums with existing segment checksums from the candidate existing files, wherein the local segment checksums have been generated by semantically segmenting the local file following the hierarchy to divide vertically and horizontally into segments; and the existing segment checksums have been generated by semantically segmenting the candidate existing files following the hierarchy to divide vertically and horizontally into segments; and if the checksums of a local segment and an existing file segment match, to identify a local segment as a duplicate segment.

FIG. 1

## Description

The present invention relates to an efficient data uploading mechanism for a data hosting service. It has many applications in the area of cloud storage of data.

The invention is applicable to semantic data hosting services in particular. It is also applicable to cloud-based data hosting services, e.g. the public data hosting services offered by dropbox, iCloud, baidu.com cloud disk, etc.

Allocating large amounts of digital data close to the consumption sites is a common practice in data hosting / cloud computing industries.

However, an intra data centre network is normally orders of magnitude faster than the broadband connections available to individual consumers, and used for uploading data files, which means that uploading can be time intensive.

Large digital data are defined as those that exceed 100 times of the network bandwidth through which the data are uploaded. For instance, with an average bandwidth of 20MB/s, large digital data files are those with sizes greater than 2Gigabytes. This is the typical size of well-populated Open Linked Data (LOD) data files and public sector data files (which is normally structured to contain millions of records of text and multimedia data).

Linked data is intended to define a set of standards and best practices for publishing and linking structured data on the Web, and the term "open" implies that the data is freely accessible. Linked data extends the web by providing semantic mark-up of data, using RDF (a simple graph-based data model), designed specifically for use in the context of the Web, and usually hierarchical in structure. LOD envisages a network of knowledge with data semantically annotated using the so-called ontologies which are readable and understandable by both human inspectors and machines. The semantic web and linked open data initiative emphasise data sets annotated by predefined schemata (in terms of ontologies) which are thus machine-understandable.

Individual users frequently upload large digital data files from their local disks to cloud-based data hosting services for sharing and backup purposes. Normally, this is done by transporting all the local data to a temporary data hosting site in close proximity and when necessary moving to permanent data hosting sites at a later stage. In such a scenario, the performance bottleneck is normally the domestic broadband connection which normally less than 20Mbit/s or 40Mbit/s for dedicated fabric connection, rather than the connection between data centres (which can be performed with much more relaxed time constraints). In reality, the actual speed can be much lower than the quoted domestic broadband rate.

It is desirable to increase efficiency of this backup process.

According to one embodiment of a first aspect of the invention there is provided a similarity module arranged to identify whether a local data file is identical in whole or in part to any of a plurality of existing files stored by a data hosting service, wherein the local file and the existing files are both hierarchically structured preferably according to a graph-based hierarchical model (although for unstructured data, annotations based on a hierarchical conceptual model, could alternatively be used), the similarity module comprising: one or more inputs for metadata and checksums from the local file and from the existing files; and a processor configured: to compare the local file metadata with the metadata of existing data files; to identify one or more candidate existing files for which the existing file metadata matches the local file metadata to a predetermined extent; to compare a local file checksum with a checksum of each of the one or more candidate existing files and if there is a matching candidate existing file for which the checksum matches the local file checksum, to identify the local file as a duplicate file of the matching candidate existing file; and if there is no matching candidate existing file for which the existing file checksum matches the local file checksum, to compare local segment checksums with existing segment checksums from the candidate existing files, wherein the local segment checksums have been generated by semantically segmenting the local file following the hierarchy to divide vertically and horizontally into segments; and the existing segment checksums have been generated by semantically segmenting the candidate existing files following the hierarchy to divide vertically and horizontally into segments; and if the checksums of a local segment and an existing file segment match, to identify a local segment as a duplicate segment.

The inventor has come the realisation that a significant percentage of individual consumers may back up popular materials, e.g. video / audio clips and large digital data files with very limited modification. These popular materials may include large digital data.

Hence multiple users make duplicates of the same or nearly the same data files at their personal/home areas (e.g. disk space in the hosting service allocated to individual users). Such duplications can be for backup or convenience reasons or simply because the particular user is not aware of the existence of other replicas.

Invention embodiments try to deal with the issues when users are trying to upload large data files to hosting services, by leveraging the existing data files (i.e. data files already deposited on to data hosting services) and by exploiting the hierarchical structure of the files for semantic segmentation. Semantic segmentation may be slower than simple syntactic segmentation. However it will provide better division, e.g. independent from the actual storage order. Semantically related items belonging to one segmentation can be stored at different physical locations, but whatever the storage order, segments with the same function/meaning will be identified. In this sense, vertical segmentation divides the files by separating contents in upper and lower tiers in the hierarchy and horizontal segmentation divides the content in one tier. For example, assuming the graph can be covered by a spanning tree, for an effective root, the vertical segmentation divides the data by separating items/units at upper and lower levels (tiers) in the hierarchy and horizontal segmentation divides the content in one tier together with all the contents/items from the descendant tiers/levels.

These embodiments of the invention use metadata and a checksum methodology as well as semantic segmentation in order to match not just wholly identical local and existing data files but also to determine when there is a part of a local file (or data set) which is already provided in the data hosting service. As an aside, it is noted that the terms "file" and "data set" are used interchangeably herein. The term "metadata" is taken to embrace information about the file, but not the contents of the file.

The metadata which is compared to find candidate files must match to a predetermined extent, possibly expressed as a percentage. This predetermined extent may be 100% (for example identical characters in the file title), or lower, such as an 80% percentage match of words within a title, or the same file size within a margin of 10%.

As a result of the invention embodiments, uploading a file can be either avoided or upload of part of the file can be avoided, by use of conventional techniques such as pointers and references to the existing data set.

In summary, the invention embodiments aim to help mitigate transport of entire data files and thus avoid heavy network traffic of a broadband connection from the user to the data hosting service, such as a domestic broadband connection.

The similarity module may be arranged at the user (local) computer, or at the data hosting service, for example as part of a server or it may be in some other network entity. Equally, the functionality of the similarity module may be distributed between the local computer and the data hosting service.

In one embodiment, the similarity module may be configured to carry out a recheck of a matching candidate existing file before final identification of the local file as a duplicate file, wherein the recheck comprises: comparing a checksum of a selected segment of the local file and a checksum of a selected equivalent segment of the matching candidate existing file having the same offset as in the local file and confirming the identification of the local file as a duplicate file of the matching candidate existing file if the segment checksums match.

This recheck is a simple cross check of whether the candidate existing file and the local file are nearly identical and could use syntactic rather than semantic segmentation. Since the recheck is for confirmation and the files are already deemed sufficiently similar, the recheck is advantageously done syntactically only, to improve the speed. The selected segment of the local file and equivalent selected segment of the matching candidate existing file may be randomly selected for example, or may be simply the first segment in the files. The term offset defines the position of the start of the segment from the start of the file.

In a further embodiment, the similarity module is configured, if no candidate existing files are identified, to permit the local file to start uploading to the data hosting service. Hence the downloading is not delayed further if there are no candidate existing files/no identical files or segments. However in the background, the similarity module may continue checking for matches. Thus the similarity module may be configured while uploading takes place, to compare the local file checksum with the checksums of the existing files, and if an identical file is identified among the existing files, to terminate uploading. For example, the metadata compared may include the title and the local user may have changed the title of the file while retaining the data. The checksum of the file will remain the same and thus it will still be possible to identify an identical file amongst the existing files by use of checksum comparison.

Once a file has been uploaded, the similarity module may be configured to store the metadata of the file, for example in a metadata table, and to check that the uploaded file still matches the current local version by a metadata match. If the metadata no longer match, the uploaded file may be updated to the extent necessary.

Metadata comparison can take place in any convenient way. In one embodiment the similarity module is configured so that metadata comparison takes place in two stages. Firstly the file name and/or other high level metadata may be compared. Only if there is a suitably high level of similarity will further metadata be compared. This eliminates possibly unnecessary processing, usually based on a file name of a required similarity. The processor may be configured to widen the search to further existing files if the search of existing files with similar name and/or other descriptive metadata does not generate any candidates.

Semantic segmentation takes place in the local file and in the existing files using the same methodology. Here it may be assumed that there is a common model shared by both local and existing files. Then the remote/hosting system can determine the segmentation strategy which it should have applied to the existing files already. For the remote/hosting system, such a strategy can come from administrators maintaining the hosting site. The same strategy can be delivered to the local file (for example through a client application) and applied to the local files.

Semantic segmentation essentially separates the different elements in the structure of the file. There are various forms of semantic segmentation, but a first basic level segmentation is to divide schema-level definition vertically from instance-level population. In a second step, the instance population is segmented horizontally, for example at the leaf-level of the schema hierarchical tree, or for no schema at this level, by division into blocks of a pre-specified size.

In a still further embodiment of a similarity module as previously described, metadata comparison includes both syntactic and semantic metadata comparison. The syntactic comparison can be carried out first, due to its simplicity and the semantic comparison second, due to its abstract nature. The semantic comparison is abstract in the sense that it is of higher abstraction level from the physical syntactical data. It provides an abstraction of the content of the data file. Alternatively, both types of comparison can take place at the same time. For example, the titles and most recent update can be compared at the same time as the total number of concepts in the file.

According to an embodiment of a second aspect of the invention there is provided a method for identifying whether a local data file is identical in whole or in part to any of a plurality of existing files stored by a data hosting service, wherein the local file and the existing files are both structured according to a graph-based hierarchical model, the method comprising: comparing local file metadata with metadata of existing data files; identifying one or more candidate existing files for which the existing file metadata matches the local file metadata to a predetermined extent; comparing a local file checksum with a checksum of each of the one or more candidate existing files, wherein; if there is a matching candidate existing file for which the existing file checksum matches the local file checksum, identifying the local file as a duplicate file of the matching candidate existing file; and if there is no matching candidate existing file for which the existing file checksum matches the local file checksum, comparing each local segment checksum with existing segment checksums wherein the local segment checksums have been generated by semantically segmenting the local file following the graph hierarchy to divide vertically and horizontally into segments; and the existing segment checksums have been generated by semantically segmenting the existing files following the graph hierarchy to divide vertically and horizontally into segments; and if the checksums of a local segment and an existing file segment match, identifying a local segment as a duplicate segment.

This method aspect relates to the processing in the similarity module, whether the module is provided locally or within the data hosting service, or distributed between the two.

According to an embodiment of the third aspect there is provided a local computer arranged to identify whether a local data file stored at the local computer is identical in whole or in part to any of a plurality of existing files stored by a data hosting service, wherein the local file and the existing files are both hierarchically structured, preferably according to a graph-based hierarchical model, the local computer comprising: a file uploading manager to load the local file into the local computer; a file metadata extractor configured to extract metadata of the local file; a remote data manager configured to download existing metadata of existing data files from the data hosting service; a similarity module configured to compare the local file metadata with the existing metadata and to identify one or more candidate existing files for which the existing file metadata matches the local file metadata to a predetermined extent; and a data checksum generator configured to generate a local file checksum of the local file; wherein the remote data manager is also configured to download a checksum of each of the one or more candidate existing files; the similarity module is also configured to compare the local file checksum with the checksum of each of the one or more candidate existing files and if there is a matching candidate existing file for which the existing file checksum matches the local file checksum, to identify the local file as a duplicate file of the matching candidate existing file; and a file segmentation module is configured, if there is no matching candidate existing file for which the existing file checksum matches the local file checksum, to semantically segment the local file following the hierarchy to divide vertically and horizontally into segments; the data checksum generator is also configured to generate a local segment checksum for each segment, the remote data manager is also configured to download existing file segment checksums which have been generated by semantic segmentation and checksum generation of the candidate existing files, and the similarity module is also configured to compare each local segment checksum with the existing file segment checksums and if the checksums of a local segment and an existing file segment match, to identify the local segment as a duplicate segment.

A corresponding method is provided an embodiment of a fourth aspect pertaining to a method at a local computer for identifying whether a local data file stored at the local computer is identical in whole or in part to any of a plurality of existing files stored by a data hosting service, wherein the local file and the existing files are both hierarchically structured, preferably according to a graph-based hierarchical model, the method comprising: extracting metadata of the local file; downloading existing metadata of existing data files from the data hosting service and comparing the local file metadata with the existing metadata; identifying one or more candidate existing files for which the existing file metadata matches the local file metadata to a predetermined extent; generating a local file checksum of the local file; downloading a checksum of each of the one or more candidate existing files and comparing the local file checksum with the checksum of each of the one or more candidate existing files; if there is a matching candidate existing file for which the existing file checksum matches the local file checksum, identifying the local file as a duplicate file of the matching candidate existing file; and if there is no matching candidate existing file for which the existing file checksum matches the local file checksum, semantically segmenting the local file following the hierarchy to divide vertically and horizontally into segments; generating a local segment checksum for each segment, and comparing each local segment checksum with existing file segment checksums which have been generated by semantic segmentation and checksum generation of the candidate existing files and if the checksums of a local segment and an existing file segment match, identifying the local segment as a duplicate segment.

Alternatively the similarity module functionality can be provided partly or wholly by the host. In an embodiment of a fifth aspect of the invention there is provided a server (or computer) of a data hosting service, the server being arranged to identify whether a local data file stored at a local computer is identical in whole or in part to any of a plurality of existing files stored by the data hosting service, wherein the local file and the existing files are both hierarchically structured, preferably according to a graph-based hierarchical model, the server comprising: a host file manager configured to load existing files; a segmentation generator configured to semantically segment each of the existing files following the hierarchy to divide vertically and horizontally into segments; a host file metadata extractor configured to extract metadata of each of the existing data files; a host checksum generator configured to generate a checksum of each of the existing files and to generate an existing file segment checksum for each segment; an uploading interface configured to upload local metadata from the local computer, to upload a local file checksum from the local computer and to upload a local segment checksum for each segment of the local file which has also been semantically segmented following the hierarchy to divide vertically and horizontally into segments; a host similarity module configured to compare the metadata of the existing data files with the local file metadata uploaded from the local computer; and to identify one or more candidate existing files for which the existing file metadata matches the local file metadata to a predetermined extent; wherein the host similarity module is also configured to compare the checksum of each of the one or more candidate existing files with the local file checksum; and if there is a matching candidate existing file for which the existing file checksum matches the local file checksum, to identify the local file as a duplicate file of the matching candidate existing file; and the host similarity module is also configured, if there is no matching candidate existing file for which the existing file checksum matches the local file checksum, to compare each local segment checksum with the existing segment checksums and if the checksums of a local segment and an existing file segment match, to identify the local segment as a duplicate segment.

In a corresponding method, an embodiment of a sixth aspect of the invention provides a method at a server of a data hosting service, for identifying whether a local data file stored at a local computer is identical in whole or in part to any of a plurality of existing files stored by the data hosting service, wherein the local file and the existing files are both hierarchically structured, preferably according to a graph-based hierarchical model, the method comprising: loading existing files; extracting metadata of each of the existing data files; generating a checksum of each of the existing files; uploading local metadata from the local computer; comparing the metadata of the existing data files with the local file metadata uploaded from the local computer; and identifying one or more candidate existing files for which the existing file metadata matches the local file metadata to a predetermined extent; uploading a local file checksum from the local computer; comparing the checksum of each of the one or more candidate existing files with the local file checksum; and if there is a matching candidate existing file for which the existing file checksum matches the local file checksum, identifying the local file as a duplicate file of the matching candidate existing file; if there is no matching candidate existing file for which the existing file checksum matches the local file checksum, semantically segmenting each of the existing files following the hierarchy to divide vertically and horizontally into segments; generating an existing file segment checksum for each segment; uploading a local segment checksum for each segment of the local file which has also been semantically segmented following the hierarchy to divide vertically and horizontally into segments, and comparing each local segment checksum with the existing segment checksums and if the checksums of a local segment and an existing file segment match, identifying the local segment as a duplicate segment.

A method according to preferred embodiments of the present invention can comprise any combination of features of the apparatus aspects and vice versa. Methods according to method embodiments can be described as computer-implemented in that they require processing and memory in the local computer/server.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which when loaded onto the server and/or local computer configures it or them to carry out the method steps according to any of the preceding method definitions or any combination thereof.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results.

Elements of the invention have been described using the terms "module", "manager", "generator", "extractor" etc. The skilled person will appreciate that such terms and their equivalents may refer to parts of the local computer and/or server that are spatially separate but combine to serve the function defined. Equally, the same physical parts of the local computer or server may provide two or more of the functions defined. For example, separately defined means may be implemented using the same memory and/or processor as appropriate.

Preferred features of the present invention will now be described, purely by way of example, with reference to the accompanying drawings in which:

Figure 1 is an overview flowchart of a similarity module;
Figure 2 is an overview flow diagram of processing within the user and data hosting system;
Figure 3 is a flowchart with a view of semantic processing;
Figure 3a is a flowchart with a view of monitored uploading;
Figure 4 is a block diagram of a local computer;
Figure 5 is a block diagram of a server; and
Figure 6 is a block diagram of a computing device.

The technical challenges addressed by embodiments of the present invention are:

1. To reduce network bandwidth consumption when backing up large data files and/or
2. To reduce file duplication of data hosting service and/or
3. To improve individual user experience by reducing upload data allowance and bandwidth requirement.

The invention embodiments try to achieve the above objectives by detecting duplication among data files based on metadata and by semantically segmenting data files and detecting duplication of data segments. This allows the creation of copies of the duplicated parts at the hosting service or the creation of references pointing to the duplicated parts. The entirety of the data file (or images of the duplicated parts) may be provided at the individual users' home area within the data hosting service.

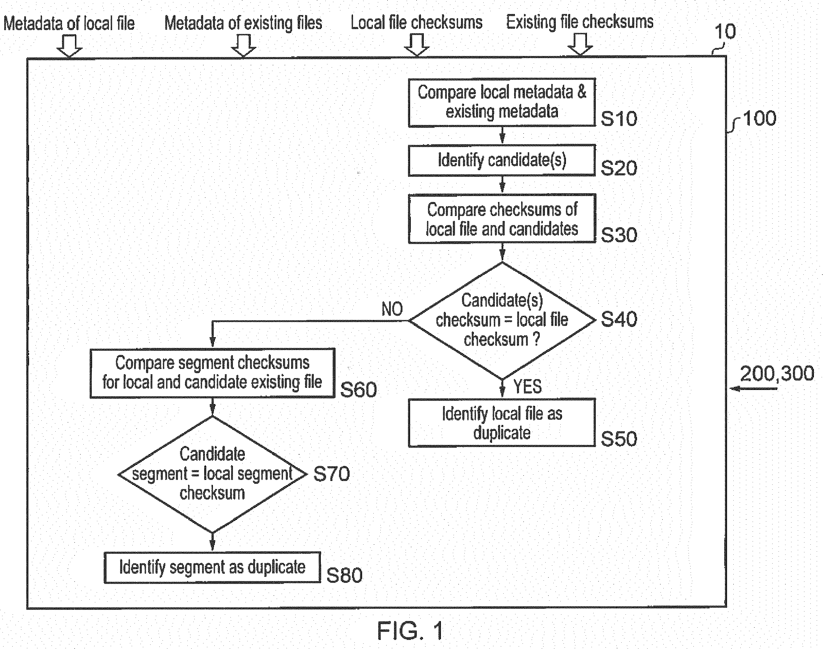

Figure 1 gives an overview of the steps carried out in the invention in a similarity module 200, 300, which as mentioned above may be situated at the local computer, at the data hosting service, or distributed between the two. Inputs to this process are metadata of the local file, metadata of existing files, the local file checksum and the existing file checksum. All of these data may be created at the appropriate time. For example the local file checksum and (segmentation and) checksums of the local segments from the local file may be provided at the time the user wishes to upload the local data file. The (segmentation and) existing file segment checksum at the data hosting service may also be provided on the fly. In contrast the existing file checksums for the entire existing file may be provided in advance when the data hosting system permits, for example when the system is at idle.

The similarity module essentially consists of inputs 10 and processor 100 that carries out the necessary processing as follows. The local metadata and existing metadata is compared in step S10 in order to compare the local file for uploading with existing files. This comparison uses metadata, such as titles, encoding etc. From this comparison candidates are identified in step S20. For example if the title matches in terms of matching of the characters in the title to a predetermined extent (or other such measures as will be familiar to the person skilled in the art), a candidate is identified in step S20. Then the checksums of the local file and the candidates are compared.

A checksum is usually a hash function used to uniquely identify a file by allocating numbers to features according to a known algorithm. If there are identical checksums in answer to step S40, as well as sufficiently matched metadata, the local file is identified as a duplicate of the existing file in step S50. There may be further steps to recheck this matching candidate as set out in more detail later.

On the other hand if there is no matching checksum amongst the candidates then in step S60 the segments of the local file and existing candidate files are checked. As set out above, the segmentation is semantic and follows the hierarchical structure of the files. This step S60 is particularly advantageous, for example when the local file and candidate existing are almost identical barring for instance the addition of one section. This would prevent the checksums from matching, but comparing the checksums of individual segments will reveal the extent of duplication and allow only the new part of the local file to be uploaded, for example with the remaining segments being replaced by references to the existing files.

In a detailed embodiment, the following sequence of steps may be carried out:

1. Metadata of the data (file) to be uploaded are extracted by the local machine.

2. The metadata are compared against with those from existing data. The comparison can be done in two ways:

    a. New metadata are uploaded to a server and comparison is performed at the server.

    b. Existing metadata are downloaded from the server to ensure fast and parallel metadata comparison handled by each client. This may imply a periodical update of a local machine to be consistent with a remote server.

3. If a candidate is identified,

    a. The checksum of the entire file are generated. This is performed at the client/local machine where the data file resides.

    b. The checksum is compared with those of the candidates. Again, such a process can be either performed at the client or at the server, as the checksum data are rather small and can be easily downloaded to the local machine on the server. The checksum of an entire data set can be generated when the system has spare resources and updated periodically with a predefined time interval (defined by the users).

        i. If match can be found, recheck by comparing a (or several) random selected (or initial) data segment of the data with the checksum of existing data segment (with the same offset). In this step, again a checksum is generated and compared with the checksum generated in real time with the same offset values. The checksum of remote existing data files segment is generated at the remote machine and downloaded to the local machine for comparison.

            1. If a match is confirmed, duplicate data (files) are identified

            2. Otherwise, go to (ii)

        ii. Otherwise,

            1. Semantically segment the data

                a. Here we assume a semantic structure exists

                b. Semantic segmentation is done both horizontally and vertically.

            2. Create a semantic hierarchy of segmented data

            3. Checksum are generated for each segment

            4. Different parts are then compared against the segments of existing files to identify which parts should be uploaded. As the checksum depends on the segmentation approach, the segmentation and checksum for the candidate existing files will be generated on the fly. Segmentations are normally small in size compared to the entire data files (e.g. the 64MB restriction of HFDS). Checksums can be computed efficiently under such a size restriction. Therefore, producing checksum on the fly can help to avoid expensive computational overhead and allow dynamic approaches. In this step, data are processed locally on the client machine while the semantic segmentation and checksum generation of remote data are performed on the server(s). As data semantics are normally static, such a process can be alternatively be performed in advance when the system is at idle or when the computing resource (in terms of CPU and memory) permits.

4. If no candidate,

    a. Produce checksum of the entire data file to be uploaded (this is done at the local machine where the data file resides)

    b. Start to upload the entire file to the remote server(s) machine(s))

    c. While uploading, comparing the checksum with the existing data (files) on the server,

        i. If an identical file is identified, terminate uploading and assign the existing data file on the server as a replicate.

        ii. Then copy the replicate file into the uploading destination or create a link pointing to the destination (this step is performed on the server)

5. Finally on the client side, mark the uploaded data file as processed.

6. Store the metadata of the uploaded data file on the local machine through a check-up table and constantly align with the server to ensure the metadata are up to date, if not, update accordingly to reflect the existing file.

This detailed embodiment includes a recheck as step 3bi to cross check that the candidate really is identical with the local files.

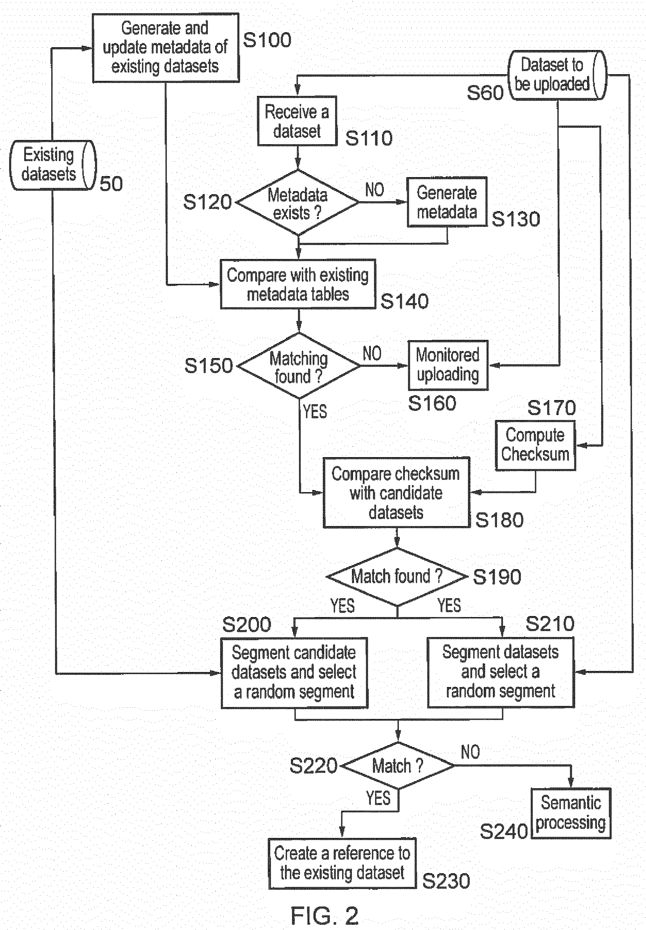

Details of the process are illustrated as a flowchart in Figure 2. Here, the dataset to be uploaded is shown at the top right as in storage 60 and the existing data sets are shown to the top left as storage 50. The generation and update of metadata for existing data sets is shown as S100. This can take place while the system is idle and is not necessarily triggered by the local data upload.

In step S110 a dataset is received for uploading. In step S120 it is queried whether the metadata for the file already exists and if not the metadata is generated in step S130. The local file metadata is compared with existing file metadata in step S140. Step S150 asks whether the metadata match. If not, there is monitored uploading in step S160. If matching is found, the candidate existing datasets checksums are compared in step S180 with the checksum of the local dataset which has been computed in step S170.

Question S190 asks if a match is found and if so there is a cross-check: segmentation of both the candidate data set with the matching checksum and the local dataset in parallel steps S200 and S210. The same random segment is selected for the local dataset and for the matching candidate dataset and checked for a match in step S220. If there is a match this means that there is a duplicate file and a reference is created to the existing dataset in step S230. If there is no match of the random segment, then semantic processing is carried out in step S240, as now explained in more detail.

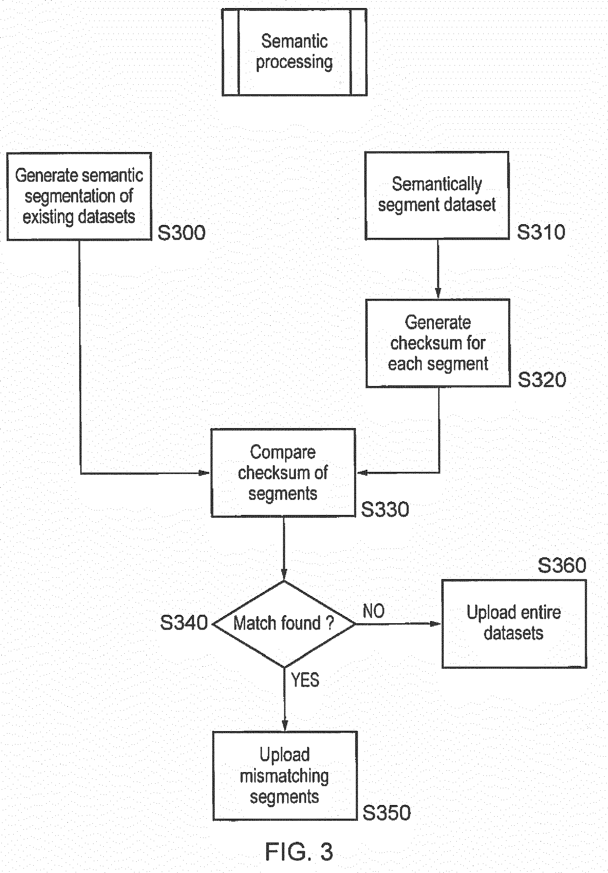

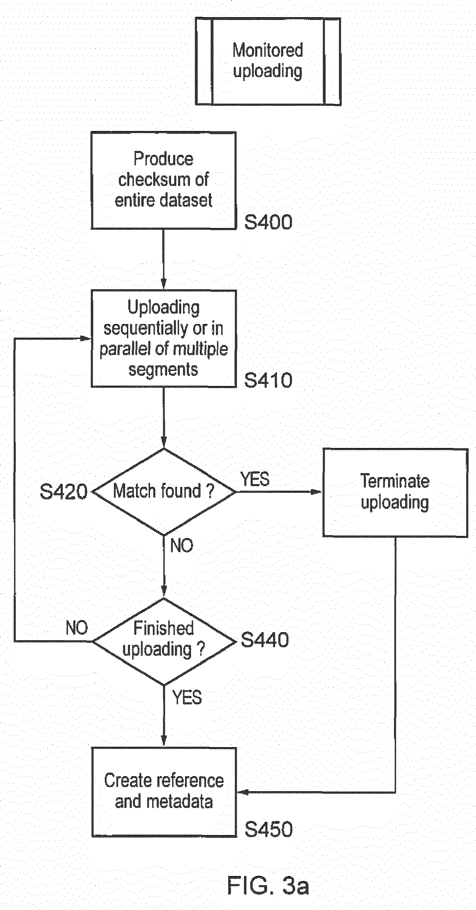

Figure 3 is an overview flowchart demonstrating semantic processing, which refers to semantic segmentation of both the existing datasets and of the local dataset. In step S300 semantic segmentation of the existing data sets is generated. This may be carried out during system idle or on the fly. The segmentation S310 of the local dataset is more likely to be carried out at the upload time. In step S320 a checksum is generated for each segment for the local dataset and it is assumed that the checksum has already been provided for the existing datasets. S330 is a comparison of the checksum of each of the segments in the two files. This is carried out at the upload time. If a match is found in question S340 only the mismatching segments of the local data file are uploaded in step S350; otherwise the entire local dataset is uploaded in step S360.

Figure 3a is an overview flowchart of the monitored upload process. In step S400 the checksum of the entire dataset is produced. In step S410 uploading of the local file starts, whether sequentially or in parallel. During uploading, the process checks for a match with existing hosted files (irrespective of the previous metadata comparison). If a match is found in step S420, then uploading is terminated in step S430 and a reference and metadata is created in step S450. A pointer is generated pointing to the identified existing files and the metadata of the newly "uploaded" data file updated to refer to the existing data files If no match is found, uploading continues to the end in step S440 before step S450.

Metadata comparison (which is either processed at the client or the server or both, for different stages of the process) may be conducted as follows:

> Two tier metadata comparison: syntactic metadata and semantic metadata comparison. The syntactic metadata or descriptive metadata refers to the metadata about the data set/file. It can be understood generically as descriptive metadata indicating information such as the authors, authoring tools, provenance (history), length, format etc. of a data file. Syntactical structural metadata may give information about the syntactical structure, word counts, units, number of paragraphs, etc.

Semantic metadata on the other hand provides the definitions and meaning of the conceptual model imposed on the data file. It is normally provided through a data model or an ontology. This will define a conceptual structure over the data files. Syntactic metadata is about the data file regardless of the imposed conceptual model, e.g. how many words in the data file. Semantic metadata is about the data conceptual model, e.g. how many concepts there are in the imposed conceptual model.

Hence Semantic metadata, inherently provide the meanings of the data, since the semantic data model describes the meaning of its instances. They can indicate the total number of concepts and the total number of instances in the data set, domain/base URLs, etc. These divisions are also used during segmentation.

The syntactic metadata comparison may then be performed in two stages, exemplified below. Of course there are very many different variations in the way that the comparison is conformed and the specific methodology below is one example only.

Let 3-tuple ($n$, $m_{syn,f}$) uniquely identify a digital data file, where n is the file name, m is other syntactic metadata, and $f$ is the format (encoding method) of the file. Superscript $l$ denotes a local file and superscript $r$ denotes a remote file.

> 1. Index the $\langle n_i^r, m_i^r, f_i^r \rangle$ files of the remote sites
>
> 2. Read $n^l$, $m^l$, $f^l$ and transport to remote site for processing
>
> 3. The similarity can be computed in the following steps:
>
> > a. Comparing $n_i^r$ and $n^l$
> >
> > b. Comparing $m_i^r$ and $m^l$
> >
> > c. If both a and b return a similarity above predefined thresholds, confirm and compare format (encoding) methods.
> >
> > > i. If $f^r \rightarrow f^l$, locate format can be obtained from the remote format with not information loss, return a match

   ii. Otherwise, return no-match

The rationale is if the remote encoding can be converted to the local encoding with no information loss, a match is provisionally confirmed.

When comparing local files against remote, already-archived files, a plethora of tools from digital preservation and the digital library community can be used. This includes metadata extraction, file analysis, checksum calculation, etc, which are readily available.

When comparing names of digital data files, methods for exact string matching of both file names and file extensions should be applied. Of course, file names can only provide assistant information to the similarity of two files due to the fact that such information can be easily changed to project falsified information.

Further, metadata are normally produced (extracted) and updated along with the digital data (which is the contact of the files). For standard file formats, metadata extraction tools abound, such as http://meta-extractor.sourceforge.net/

In general, extracted metadata is more reliable than file names and extensions. It faithfully records the production, history and basic statistics of the data files. It presents provenance details of the file to ensure data safety and traceability.

Metadata include all the data that specify the data (file) apart from the actual content. They are not restricted to a particular type of metadata. Comparing metadata is in the last instance based on checksum. The reason for using checksum is its small size and that it truly represents the data. In the end to check whether the contents of two files are the same or not, the checksum will have to be used as the last resort.

Existing tools can generate checksum of common data formats. Once generated, file checksum can be compared straightforwardly with significantly improved performance comparing to deep comparison of two data files.

Similarity measures

It is assumed that the integrity and authenticity of user files is always highly valued.

This leads to the following preferred process:

   1. The file name (including extension) can be used to filter candidate files.

      a. Index the host files periodically, by collecting features or metadata of files and putting them in a quick look-up table for easy access.
      b. Fast index search using the file name and extension of the local files.
      c. At the first instance, only those hosted files with sufficiently high similarity with the local files in names are selected as candidates for further comparison;

      d. If the name-based search does not generate any candidates, the search space is expanded

   2. Extracted metadata can be the second phase of filtering, given that the number of files at the data hosting site can be very big, denying any pair-wise comparison.

   3.The quality of checksum depends on the feature selection and hash calculation. Feature selection (to carry out checksum for a selection of features) can be tuned with machine learning based approaches. Once calculated, comparison can be performed in liner-time.

## Syntactic metadata comparison

The following features can help to fast screen candidate data file.

   **1. History.** Version history is another useful criteria to define the update sequence, excluding candidates dated before the actual production date and highlight candidates that are recent modification of the compared data file.

   **2. Production tool.** In many cases, the software used to produce the digital data is recorded in the metadata. The production environment largely defines nearly all the key aspects of the file data. Therefore, the production tool, if present should be compared for better alignment. Note that the format compatibility is not bidirectional. One encoding can be converted to another in a loss-less manner does not necessarily mean the reserve holds.

## Semantic metadata comparison

One important contribution of invention embodiments may be seen as leveraging semantic metadata in comparison and in segmenting data.

The semantic metadata provides "statistics" of the contents. This can include the number of concepts, predicates and instances, the imported data models, and in many cases, the top division of the data model. When comparing semantic metadata, such information can help to make sure the files are in alignment (matching). The overall match should be drawn from the exact match of all the metadata categories.

## Semantic-based data segmentation

When data cannot be de-duplicated in entirety, data segmentation is performed and deduplication based on data segments.

Note that data segmentation for de-duplication is different from that used in the related art for storage locality. The latter puts more emphasis on data correlations while the former has no requirements on the density of inter-segment connections and the existence of boundary entities, as long as a consistent strategy is adopted for both local and remote files.

In invention embodiments, the following heuristics may be used for semantic data segmentation:

1. Segment data model and instance data. This is normally referred to as T-Box and A-Box separation in OWL. In general, data can contain schema-level definition and instance level population. A clear boundary can be defined between such data segments, giving a vertical division into segments.
2. If a schema exists:

a. Compute the hierarchical tree of the schema. Segment instance population horizontally at the leaf-level of the schema hierarchical tree.
b. This is to avoid mismatch caused by random access of the instance population.

3. If a schema does not exist: apply the following horizontal fast segmentation method:

a. Divide the data file by 4MB to get the ideal split number *n*. 4MB is based on industrial recommendation. Other size limit can be defined by the hosting services.
b. Select the *n* highest degree nodes from the graph model underlying the data; ties are broken based on alphabet order of the local data identifiers.
c. Based on alphabet order, adding to each segment in breadth first manner the next nearest neighbour that is not yet added to any data segments. Ties are broken in favour of the segment where most of the sibling nodes are.
d. Data in a segment is stored by a breadth-first order, based on the ascendant creation/modification time (with newest at the last if a time stamp is available) or alphabet order otherwise.

This segmentation method is to reduce randomness and help to ensure if only minor modifications are performed to the data, most segments are not affected and thus will not be replaced when uploading the entire dataset again.

In the above example, the emphasis is on data files having a graph-like structure. This means the data file is structured and rules out unstructured data (files). However, invention embodiments are equally applicable when a structure is deterministically imposed on otherwise unstructured data (for example, by mapping a fixed section of the unstructured data to a well-defined annotation). Through annotations based on a hierarchical conceptual model or any other suitable methodology, these unstructured data sets (files) can still be managed by the solution of invention embodiments.

For instance, for a paragraph of text, NLP technology can be applied to chop the paragraph into several sections and annotate them based on a hierarchical model. This is equivalent to overlaying a structure over the text.

**Local client**

An example of a client application (which may be downloaded and installed on a local machine) of the data host site can be responsible for the following tasks.

1. Manage, index and segment local files
2. Extract metadata and calculate checksum for local files and/or data segments.
3. Periodically download data from remote server and maintain consistency between local copies of metadata (including pre-computed checksum) with remote copies
4. Maintain a check-up table for syntactic or semantic segmentation of data files and the metadata for each segmentation
5. Download data from remote candidates files for local, off-line comparison to ensure better performance
6. Validate the similarity when a remote data file is considered identical

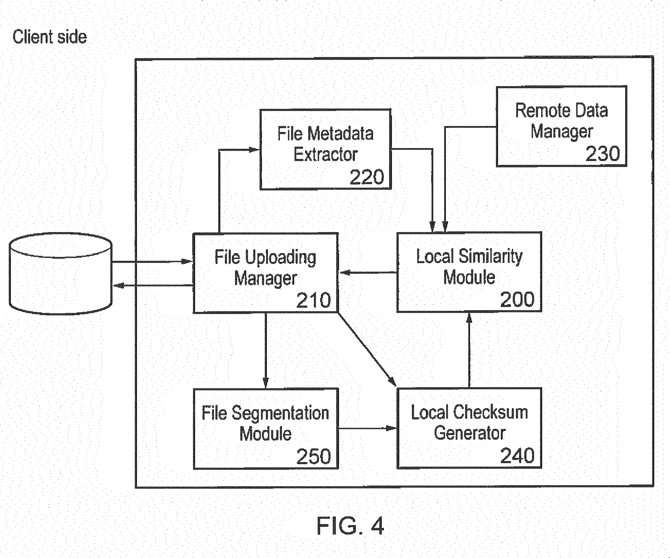

Figure 4 shows a block diagram of a local client/user computer with the modules of invention embodiments. In this instance, the local computer is arranged to identify whether a local data file stored at the local computer is identical in whole or in part to any of a plurality of existing files stored by the data hosting service.

The local computer includes the following modules:

a file uploading manager 210, to manage communications with the data hosting service, for example, for scheduling data uploading task to the remote server and to handle network communication between the local computer and the server;
a file metadata extractor 220, configured to extract metadata of the local file;
a remote data manager 230, configured to manage existing metadata of existing data files from the data hosting service;
a local similarity module 200 configured to compare the local file metadata with the existing metadata and to identify one or more candidate existing files for which the existing file metadata matches the local file metadata to a predetermined extent; and
a local data checksum generator 240 configured to generate a local file checksum of the local file.

To allow checksum comparison, the remote data manager 230 is also configured to manage a checksum of each of the one or more candidate existing files and the similarity module 200 is also configured to compare the local file checksum with the checksum of each of the one or more candidate existing files. If there is a matching candidate existing file for which the existing file checksum matches the local file checksum, the similarity module identifies the local file as a duplicate file of the matching candidate existing file.

There is also a file segmentation module 250, which is configured to semantically segment the local file following the graph hierarchy to divide vertically and horizontally into segments. This is required if there is no matching candidate existing file for which the existing file checksum matches the local file checksum. The data checksum generator 240 is also configured to generate a local segment checksum for each segment. The remote data manager 230 is also configured to manage existing file segment checksums which have been generated by semantic segmentation and checksum generation of the candidate existing files, and the similarity module is also configured to compare each local segment checksum with the existing file segment checksums and if the checksums of a local segment and an existing file segment match, to identify the local segment as a duplicate segment.

Of course, some or all of the comparison functionality can be instead carried out by the data hosting service, in accordance with the user or data hosting service preference. Thus the local similarity module may not carry out all of the comparisons required. For example, the metadata comparison could be carried out locally and the checksum comparisons at the host, or vice versa. Equally, the entire process may be controlled locally or at the host, for example by the similarity module.

**Data Hosting Server**

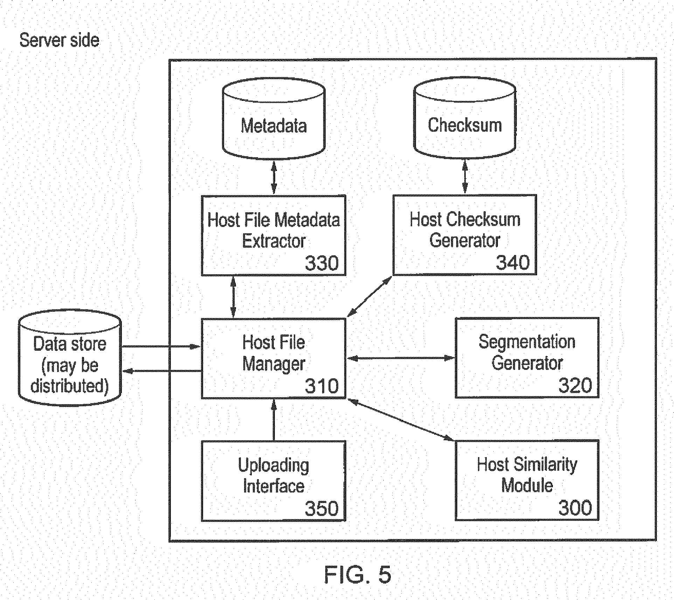

Figure 5 shows a block diagram of a server with the modules of invention embodiments. The server of the data hosting service can also be arranged to identify whether a local data file stored at a local computer is identical in whole or in part to any of a plurality of existing files stored.

The server comprises the following modules:

a host file manager 310 configured to load existing files from data storage;
a segmentation generator 320 configured to semantically segment each of the existing files following the graph hierarchy to divide vertically and horizontally into segments;
a host file metadata extractor 330 configured to extract metadata of each of the existing data files;
a host checksum generator 340 configured to generate a checksum of each of the existing files and to generate an existing file segment checksum for each segment;
an uploading interface 350 (which is the counterpart of uploading manager 210 at the local computer) configured to manage upload of local metadata from the local computer, to manage upload of a local file checksum from the local computer and to manage upload of a local segment checksum for each segment of the local file which has also been semantically segmented following the graph hierarchy to divide vertically and horizontally into segments; and
a host similarity module 300 configured to compare the metadata of the existing data files with the local file metadata uploaded from the local computer; and to identify one or more candidate existing files for which the existing file metadata matches the local file metadata to a predetermined extent.

The host similarity module 300 is also configured to compare the checksum of each of the one or more candidate existing files with the local file checksum. If there is a matching candidate existing file for which the existing file checksum matches the local file checksum, it identifies the local file as a duplicate file of the matching candidate existing file.

The host similarity module 300 is also configured, if there is no matching candidate existing file for which the existing file checksum matches the local file checksum, to compare each local segment checksum with the existing segment checksums and if the checksums of a local segment and an existing file segment match, to identify the local segment as a duplicate segment.

**Benefit**

The duplication checking method of invention embodiments performed a priori to uploading can benefit both service providers and individual users; for example, the method may:

1. Improve uploading experience of individual users, especially when large size data files are uploaded.
2. Reduce network traffic for individual users
3. Reduce data duplication and disk usage of service providers
4. Release bandwidth of service providers
5. Allow more flexible data locality optimisation for service providers; based on uploading statistics, service providers can decide how many copies of data there should be and where the copies should be located/stored.

**Computer implementation**

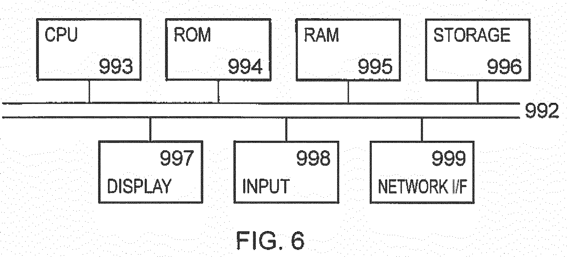

Figure 6 is a block diagram of a computing device, such as a data storage server, which embodies the present invention, and which may be used to implement a method of an embodiment. The computing device comprises a computer processing unit (CPU) 993, memory, such as Random Access Memory (RAM) 995, and storage, such as a hard disk, 996. Optionally, the computing device also includes a network interface 999 for communication with other such computing devices of embodiments. For example, an embodiment may be composed of a network of such computing devices. Optionally, the computing device also includes Read Only Memory 994, one or more input mechanisms such as keyboard and mouse 998, and a display unit such as one or more monitors 997. The components are connectable to one another via a bus 992.

The CPU 993 is configured to control the computing device and execute processing operations. The RAM 995 stores data being read and written by the CPU 993. The storage unit 996 may be, for example, a non-volatile storage unit, and is configured to store data.

The display unit 997 displays a representation of data stored by the computing device and displays a cursor and dialog boxes and screens enabling interaction between a user and the programs and data stored on the computing device. The input mechanisms 998 enable a user to input data and instructions to the computing device.

The network interface (network 1/F) 999 is connected to a network, such as the Internet, and is connectable to other such computing devices via the network. The network I/F 999 controls data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 6. Such a computing device need not have every component illustrated in Figure 6, and may be composed of a subset of those components. A method embodying the present invention may be carried out by a single computing device in communication with one or more data storage servers via a network. The computing device may be a data storage itself storing at least a portion of the data graph forming a file. A method embodying the present invention may be carried out by a plurality of computing devices operating in cooperation with one another. One or more of the plurality of computing devices may be a data storage server storing at least a portion of the data graph.

**Claims**

1. A similarity module arranged to identify whether a local data file is identical in whole or in part to any of a plurality of existing files stored by a data hosting service, wherein the local file and the existing files are both hierarchically structured, preferably according to a graph-based hierarchical model, the similarity module comprising:

   one or more inputs for metadata and checksums from the local file and from the existing files; and

   a processor configured:

   to compare the local file metadata with the metadata of existing data files;
   to identify one or more candidate existing files for which the existing file metadata matches the local file metadata to a predetermined extent;
   to compare a local file checksum with a checksum of each of the one or more candidate existing files and if there is a matching candidate existing file for which the checksum matches the local file checksum, to identify the local file as a duplicate file of the matching candidate existing file; and
   if there is no matching candidate existing file for which the existing file checksum matches the local file checksum, to compare local segment checksums with existing segment checksums from the candidate existing files, wherein the local segment checksums have been generated by semantically segmenting the local file following the hierarchy to divide vertically and horizontally into segments; and the existing segment checksums have been generated by semantically segmenting the candidate existing files following the hierarchy to divide vertically and horizontally into segments; and
   if the checksums of a local segment and an existing file segment match, to identify a local segment as a duplicate segment.

2. A similarity module according to claim 1, the processor being further configured to carry out a recheck of a matching candidate existing file before final identification of the local file as a duplicate file, wherein the recheck comprises:

   comparing a checksum of a selected segment of the local file and a checksum of a selected equivalent segment of the matching candidate existing file having the same offset as in the local file and confirming the identification of the local file as a duplicate file of the matching candidate existing file if the segment checksums match.

3. A similarity module according to claim 1 or 2, the processor being further configured, if no candidate existing files are identified,
   to permit the local file to start uploading to the data hosting service;
   and optionally, while uploading takes place, to compare the local file checksum with the checksums of the existing files, and if an identical file is identified among the existing files, to terminate uploading.

**4.** A similarity module according to claim 3, the processor being further configured to store metadata of an uploaded file, to check that the metadata match with the metadata of a current local version and to update the uploaded file if the metadata do not match.

**5.** A similarity module according to any of the preceding claims, wherein the processor is configured so that metadata comparison is a two-stage process, in which the file name and/or other descriptive metadata is compared, and further metadata is compared only if the similarity between the local file name and the existing file name is above a similarity threshold.

**6.** A similarity module according to claim 5, wherein the processor is configured to widen the search to further existing files if the search of existing files with similar name and/or other descriptive metadata does not generate any candidates.

**7.** A similarity module according to any of the preceding claims, wherein semantic segmentation segments schema-level definition from instance-level population, and then segments instance population.

**8.** A similarity module according to any of the preceding claims, wherein metadata comparison includes both syntactic and semantic metadata comparison.

**9.** A method for identifying whether a local data file is identical in whole or in part to any of a plurality of existing files stored by a data hosting service, wherein the local file and the existing files are both hierarchically structured, preferably according to a graph-based hierarchical model, the method comprising:

comparing local file metadata with metadata of existing data files;
identifying one or more candidate existing files for which the existing file metadata matches the local file metadata to a predetermined extent;
comparing a local file checksum with a checksum of each of the one or more candidate existing files;
if there is a matching candidate existing file for which the existing file checksum matches the local file checksum, identifying the local file as a duplicate file of the matching candidate existing file; and
if there is no matching candidate existing file for which the existing file checksum matches the local file checksum, comparing each local segment checksum with existing segment checksums wherein the local segment checksums have been generated by semantically segmenting the local file following the hierarchy to divide vertically and horizontally into segments; and the existing segment checksums have been generated by semantically segmenting the existing files following the hierarchy to divide vertically and horizontally into segments; and
if the checksums of a local segment and an existing file segment match, identifying a local segment as a duplicate segment.

**10.** A local computer arranged to identify whether a local data file stored at the local computer is identical in whole or in part to any of a plurality of existing files stored by a data hosting service, wherein the local file and the existing files are both hierarchically structured, preferably according to a graph-based hierarchical model, the local computer comprising:

a file uploading manager configured to manage communication with the data hosting service;
a file metadata extractor configured to extract metadata of the local file;
a remote data manager configured to manage existing metadata of existing data files from the data hosting service;
a similarity module configured to compare the local file metadata with the existing metadata and to identify one or more candidate existing files for which the existing file metadata matches the local file metadata to a predetermined extent; and
a data checksum generator configured to generate a local file checksum of the local file; wherein
the remote data manager is also configured to manage a checksum of each of the one or more candidate existing files;
the similarity module is also configured to compare the local file checksum with the checksum of each of the one or more candidate existing files and if there is a matching candidate existing file for which the existing file checksum matches the local file checksum, to identify the local file as a duplicate file of the matching candidate existing file; and
a file segmentation module is configured, if there is no matching candidate existing file for which the existing file checksum matches the local file checksum, to semantically segment the local file following the hierarchy to divide vertically and horizontally into segments;
the data checksum generator is also configured to generate a local segment checksum for each segment,
the remote data manager is also configured to manage existing file segment checksums which have been generated by semantic segmentation and checksum generation of the candidate existing files, and
the similarity module is also configured to compare each local segment checksum with the existing file segment checksums and if the checksums of a local segment and an existing file segment match, to identify the local segment as a duplicate segment.

11. A method at a local computer for identifying whether a local data file stored at the local computer is identical in whole or in part to any of a plurality of existing files stored by a data hosting service, wherein the local file and the existing files are both hierarchically structured, preferably according to a graph-based hierarchical model, the method comprising:

extracting metadata of the local file;
downloading existing metadata of existing data files from the data hosting service and comparing the local file metadata with the existing metadata;
identifying one or more candidate existing files for which the existing file metadata matches the local file metadata to a predetermined extent;
generating a local file checksum of the local file;
downloading a checksum of each of the one or more candidate existing files and comparing the local file checksum with the checksum of each of the one or more candidate existing files;
if there is a matching candidate existing file for which the existing file checksum matches the local file checksum, identifying the local file as a duplicate file of the matching candidate existing file; and
if there is no matching candidate existing file for which the existing file checksum matches the local file checksum, semantically segmenting the local file following the hierarchy to divide vertically and horizontally into segments;
generating a local segment checksum for each segment, and comparing each local segment checksum with existing file segment checksums which have been generated by semantic segmentation and checksum generation of the candidate existing files and if the checksums of a local segment and an existing file segment match, identifying the local segment as a duplicate segment.

12. A server of a data hosting service, the server being arranged to identify whether a local data file stored at a local computer is identical in whole or in part to any of a plurality of existing files stored by the data hosting service, wherein the local file and the existing files are both hierarchically structured, preferably according to a graph-based hierarchical model, the server comprising:

a host file manager configured to load existing files;

a segmentation generator configured to semantically segment each of the existing files following the hierarchy to divide vertically and horizontally into segments;
a host file metadata extractor configured to extract metadata of each of the existing data files;
a host checksum generator configured to generate a checksum of each of the existing files and to generate an existing file segment checksum for each segment;
an uploading interface configured to manage upload of local metadata from the local computer, to manage upload of a local file checksum from the local computer and to manage upload of a local segment checksum for each segment of the local file which has also been semantically segmented following the hierarchy to divide vertically and horizontally into segments;
a host similarity module configured to compare the metadata of the existing data files with the local file metadata uploaded from the local computer; and to identify one or more candidate existing files for which the existing file metadata matches the local file metadata to a predetermined extent; wherein
the host similarity module is also configured to compare the checksum of each of the one or more candidate existing files with the local file checksum; and if there is a matching candidate existing file for which the existing file checksum matches the local file checksum, to identify the local file as a duplicate file of the matching candidate existing file; and
the host similarity module is also configured, if there is no matching candidate existing file for which the existing file checksum matches the local file checksum, to compare each local segment checksum with the existing segment checksums and if the checksums of a local segment and an existing file segment match, to identify the local segment as a duplicate segment.

13. A method at a server of a data hosting service, for identifying whether a local data file stored at a local computer is identical in whole or in part to any of a plurality of existing files stored by the data hosting service, wherein the local file and the existing files are both hierarchically structured, preferably according to a graph-based hierarchical model, the method comprising:

loading existing files;
extracting metadata of each of the existing data files;
generating a checksum of each of the existing files;
uploading local metadata from the local computer;

comparing the metadata of the existing data files with the local file metadata uploaded from the local computer; and identifying one or more candidate existing files for which the existing file metadata matches the local file metadata to a predetermined extent;

uploading a local file checksum from the local computer;

comparing the checksum of each of the one or more candidate existing files with the local file checksum; and if there is a matching candidate existing file for which the existing file checksum matches the local file checksum, identifying the local file as a duplicate file of the matching candidate existing file;

if there is no matching candidate existing file for which the existing file checksum matches the local file checksum, semantically segmenting each of the existing files following the hierarchy to divide vertically and horizontally into segments; generating an existing file segment checksum for each segment; uploading a local segment checksum for each segment of the local file which has also been semantically segmented following the hierarchy to divide vertically and horizontally into segments, and comparing each local segment checksum with the existing segment checksums and if the checksums of a local segment and an existing file segment match, identifying the local segment as a duplicate segment.

Metadata of local file    Metadata of existing files    Local file checksums    Existing file checksums    10

100

Compare local metadata &
existing metadata          S10

Identify candidate(s)      S20

Compare checksums of
local file and candidates  S30

NO          Candidate(s)
           checksum = local file      S40
           checksum ?

200,300

Compare segment checksums
for local and candidate existing file    S60

YES

Identify local file as
duplicate                  S50

Candidate
segment = local segment    S70
checksum

Identify segment as duplicate    S80

FIG. 1

FIG. 2

```
                    ┌──┬─────────────┬──┐
                    │  │  Semantic   │  │
                    │  │ processing  │  │
                    └──┴─────────────┴──┘


┌──────────────────┐              ┌──────────────────┐
│ Generate semantic│              │  Semantically    │
│ segmentation of  │              │ segment dataset  │
│ existing datasets│ S300         │                  │ S310
└──────────────────┘              └──────────────────┘
         │                                  │
         │                                  ▼
         │                        ┌──────────────────┐
         │                        │    Generate      │
         │                        │  checksum for    │
         │                        │  each segment    │ S320
         │                        └──────────────────┘
         │                                  │
         │        ┌──────────────┐          │
         └───────▶│   Compare    │◀─────────┘
                  │ checksum of  │
                  │  segments    │ S330
                  └──────────────┘
                         │
                         ▼                            S360
                       ◇                        ┌──────────────┐
          S340  ◇ Match found ? ◇ ──NO──▶       │ Upload entire│
                       ◇                        │   datasets   │
                         │                      └──────────────┘
                        YES
                         │
                         ▼
                  ┌──────────────┐
                  │    Upload    │
                  │ mismatching  │
                  │   segments   │ S350
                  └──────────────┘
```

FIG. 3

Monitored
uploading

Produce
checksum of
entire dataset
S400

Uploading
sequentially or in
parallel of multiple
segments
S410

S420 Match found ? ——YES——▶ Terminate
uploading

NO

NO Finished
uploading ? S440

YES

Create reference
and metadata
S450

FIG. 3a

FIG. 4

Server side

Metadata

Checksum

Host File Metadata Extractor 330

Host Checksum Generator 340

Data store (may be distributed)

Host File Manager 310

Segmentation Generator 320

Uploading Interface 350

Host Similarity Module 300

FIG. 5

| CPU | ROM | RAM | STORAGE |
|-----|-----|-----|---------|
| 993 | 994 | 995 | 996 |

992

| 997 | 998 | 999 |
|-----|-----|-----|
| DISPLAY | INPUT | NETWORK I/F |

FIG. 6

Europäisches Patentamt
European Patent Office
Office européen des brevets

# EUROPEAN SEARCH REPORT

**Application Number**

EP 16 16 9809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 812 849 B1 (UBL MALTE [DE]) 19 August 2014 (2014-08-19) <br> * column 1, line 18 - line 30 * <br> * column 1, line 34 - line 49 * <br> * column 3, line 5 - line 18 * <br> * column 4, line 55 - column 5, line 11 * <br> * column 7, line 14 - line 22 * <br> * column 7, line 51 - line 64 * <br> ----- | 1-13 | INV. <br> G06F17/30 |
| Y | US 2004/181561 A1 (KNOX RICHARD IAN [GB] ET AL) 16 September 2004 (2004-09-16) <br> * paragraph [0021] - paragraph [0023] * <br> ----- | 1-13 | |
| A | KIM DAEHEE ET AL: "SAFE: Structure-aware file and email deduplication for cloud-based storage systems", 2013 IEEE 2ND INTERNATIONAL CONFERENCE ON CLOUD NETWORKING (CLOUDNET), IEEE, 11 November 2013 (2013-11-11), pages 130-137, XP032550316, DOI: 10.1109/CLOUDNET.2013.6710567 [retrieved on 2014-01-13] <br> * page 131, right-hand column, line 5 - line 9 * <br> * abstract * <br> * page 130, right-hand column, line 24 - line 27 * <br> * page 133, right-hand column, line 12 - line 20 * <br> * figure 6b * <br> ----- | 1-13 | |
| A | Darl Kuhn ET AL: "Page 142: Checksums" In: "Linux Recipes for Oracle DBAs", 20 November 2008 (2008-11-20), Apress, XP055355843, ISBN: 978-1-4302-1575-2 page 142, <br> * page 142, paragraph 1 * <br> ----- | 1-13 | |

TECHNICAL FIELDS SEARCHED (IPC)

G06F

-/--

The present search report has been drawn up for all claims

| Place of search | Date of completion of the search | Examiner |
|---|---|---|
| The Hague | 20 March 2017 | Rameseder, Jonathan |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 402 250 B1 (JUILLARD LOIC [US]) 19 March 2013 (2013-03-19) * the whole document * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 20 March 2017 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 9809

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2017

| Patent document cited in search report | | Publication date | Patent family member(s) | | Publication date |
|---|---|---|---|---|---|
| US 8812849 | B1 | 19-08-2014 | US | 8812849 B1 | 19-08-2014 |
| | | | US | 8943315 B1 | 27-01-2015 |
| US 2004181561 | A1 | 16-09-2004 | NONE | | |
| US 8402250 | B1 | 19-03-2013 | NONE | | |

EPO FORM P0459

For more details about this annex : see Official Journal of the European Patent Office, No. 12/82